Europäisches Patentamt

European Patent Office

Office européen des brevets

(11) Veröffentlichungsnummer: **0 300 351 B1**

(12) **EUROPÄISCHE PATENTSCHRIFT**

(45) Veröffentlichungstag der Patentschrift: **25.03.92**

(21) Anmeldenummer: **88111229.6**

(22) Anmeldetag: **13.07.88**

(51) Int. Cl.⁵: **F16F 9/36**, F16J 15/56

(54) Pneumatische Feder mit einem innendruckunabhängigen Dichtungssystem mit durch Gasdruck vorgespannten Dichtlippen.

(30) Priorität: **23.07.87 DE 3724370**

(43) Veröffentlichungstag der Anmeldung:
**25.01.89 Patentblatt 89/04**

(45) Bekanntmachung des Hinweises auf die
Patenterteilung:
**25.03.92 Patentblatt 92/13**

(84) Benannte Vertragsstaaten:
**DE ES FR GB IT**

(56) Entgegenhaltungen:
**WO-A-86/00966**
**DE-A- 2 248 156**
**DE-B- 1 116 950**
**FR-A- 1 156 365**
**LU-A- 39 435**

(73) Patentinhaber: **Stabilus GmbH**
**Wallersheimer Weg 100**
**W-5400 Koblenz-Neuendorf(DE)**

(72) Erfinder: **Mintgen, Rolf, Dipl.-Ing. (FH)**
**Bahnhofstrasse 27**
**W-5441 Thür(DE)**

(74) Vertreter: **Weickmann, Heinrich, Dipl.-Ing. et al**
**Patentanwälte H. Weickmann, Dr. K. Fincke**
**F.A. Weickmann, B. Huber Dr. H. Liska, Dr. J. Prechtel Kopernikusstrasse 9 Postfach 86 08 20**
**W-8000 München 86(DE)**

EP 0 300 351 B1

## Beschreibung

Die Erfindung betrifft eine pneumatische Feder, umfassend einen Behälter, der an einem Ende offen und an dem anderen Ende geschlossen ist, eine Kolbenstange, die im Bereich des offenen Endes des Behälters mittels einer Kolbenstangenführung geführt ist und durch eine Kolbenstangendichtung abgedichtet ist, einen Arbeitsraum, der im Bereich des geschlossenen Endes des Behälters ausgebildet ist, eine Dichtungskammer, die im Bereich des offenen Endes des Behälters ausgebildet ist, einen inneren Dichtring, der den Arbeitsraum und die Dichtungskammer voneinander trennt, und einen äußeren Dichtring, der der Kolbenstangenführung zugeordnet ist, wobei der innere Dichtring und der äußere Dichtring jeweils mit einer radial inneren Dichtlippe und einer radial äußeren Dichtlippe ausgebildet sind, wobei weiter die radial inneren Dichtlippen des inneren Dichtrings und des äußeren Dichtrings jeweils an der Kolbenstange anliegen, wobei weiter die Dichtlippen des inneren Dichtrings und die Dichtlippen des äußeren Dichtrings einander gegenüberliegend angeordnet sind, und wobei weiter der in der Dichtungskammer herrschende Druck größer ist als der im Arbeitsraum herrschende Druck.

Eine derartige pneumatische Feder ist beispielsweise aus der DE-A-22 48 156 bekannt. Bei dieser pneumatischen Feder ist die Dichtungskammer mit Flüssigkeit gefüllt. Geht beim Betrieb der pneumatischen Feder Flüssigkeit aus der Dichtungskammer verloren, so führt dieser Flüssigkeitsverlust zu einem raschen Druckabfall in der Dichtungskammer, so daß die Dichtungswirkung der Dichtungskammer nicht mehr sichergestellt ist. Um diesen Druckabfall zu kompensieren, ist bei der bekannten pneumatischen Feder der innere Dichtring durch eine Schraubendruckfeder beaufschlagt, die in Richtung auf eine Druckerhöhung in der Dichtungskammer hin wirkt, um den Arbeitsraum noch ausreichend abzudichten. Darüber hinaus ist bei der bekannten pneumatischen Feder ein Nippel zum Nachfüllen von Flüssigkeit in die Dichtungskammer vorgesehen. Die bekannte pneumatische Feder weist somit einen äußerst komplexen Aufbau auf.

Demgegenüber ist es Aufgabe der Erfindung, eine pneumatische Feder der eingangs genannten Art bereitzustellen, welche einfach aufgebaut ist und bei welcher der Arbeitsraum ohne mechanische Vorspannung über lange Zeitdauern sicher abgedichtet werden kann.

Diese Aufgabe wird dadurch gelöst, daß die radial äußeren Dichtlippen des inneren Dichtrings und des äußeren Dichtrings jeweils direkt an der Innenwandung des Behälters anliegen, und daß der in der Dichtungskammer herrschende Druck von einem Gas erzeugt wird.

Die Dichtwirkung beruht auf dem Vorhandensein eines Druckunterschieds in den beiden Kammern. Der Druckunterschied zwischen dem abzudichtenden Arbeitsraum und der Dichtungskammer kann dabei analog den Mindestdrükken für Gasfedern gewählt werden. Die beiden einander gegenüberliegenden Dichtringe weisen gegeneinander gerichtete Dichtlippen auf, die durch den Gasdruck an die Kolbenstange und an die Innenwandung des Behälterrohres gepreßt werden.

Durch die Druckdifferenz zwischen dem Druck in der Dichtungskammer und der Atmosphäre, bzw. zwischen der Dichtungskammer und dem Arbeitsraum, werden die Dichtlippen angepreßt und Entweichen des Druckgases sowohl nach außen als auch in die Dichtungskammer wird verhindert. Damit wird gleichzeitig ein Entweichen von Gas aus dem Arbeitsraum solange verhindert, wie der Druck in der Dichtungskammer höher als in dem Arbeitsraum ist. Hat sich der Druck in der Dichtungskammer verringert, so wirkt immer noch der äußere Dichtring als Abdichtsystem nach herkömmlicher Dichtwirkung. Gegenüber bisher üblichen Dichtvorrichtungen, bei denen zwei gleichsinnig angeordnete Dichtringe vorgesehen sind, hat die gegeneinander gerichtete Anordnung der Dichtringe den Vorteil, daß jeder einzelne mit einer klar definierbaren Druckdifferenz beaufschlagt wird.

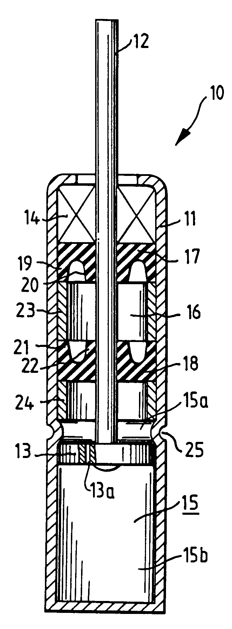

Weitere vorteilhafte Ausführungen sind in den Unteransprüchen beschrieben. Die Erfindung ist in der beiliegenden Zeichnung in einem Ausführungsbeispiel dargestellt und wird nachfolgend näher beschrieben.

Die in der einzigen Figur dargestellte Gasfeder 10 besteht im wesentlichen aus einem Behälterrohr 11, in dem eine Kolbenstange 12 mit einem daran befestigten Kolben 13 ein- und ausfahrbar ist. Die Kolbenstange 12 ist in einer Kolbenstangenführung 14 aus dem Behälterrohr 11 herausgeführt.

Das Behälterrohr 11 ist in einen Arbeitsraum 15 und eine Dichtungskammer 16 unterteilt. Die Dichtungskammer 16 ist nach außen hin, d.h., im Bereich der Kolbenstangenführung 14 mit einem äußeren Dichtring 17 und nach innen, d.h, zum Arbeitsraum 15 hin, mit einem inneren Dichtring 18 abgedichtet. Der äußere Dichtring 17 weist äußere, nach innen weisende Dichtlippen 19 auf, die an der Innenwandung des Behälterrohres 11 anliegen. Ferner weist der äußere Dichtring 17 radial innenliegende, nach axial innen weisende Dichtlippen 20 auf, die an der Oberfläche der Kolbenstange 12 dichtend anliegen.

Der innere Dichtring 18 weist radial äußere, nach axial außen weisende Dichtlippen 21 und radial innere, nach axial außen weisende Dichtlippen 22 auf. Die Dichtlippen 19 und 20 des äußeren Dichtringes 17 und die Dichtlippen 21 und 22 des inneren Dichtringes 18 sind aufeinnander zugewendet in der Dichtungskammer 16 angeordnet. Zwischen dem äußeren Dichtring 17 und dem inneren Dichtring 18 ist ein äußerer Stützring 23 in der Dichtungskammer 16 angeordnet.

Auf der der Dichtungskammer 16 abgewandten inneren Seite ist der innere Dichtring 18 mit einem inneren Stützring 24 abgestützt, der an einer Sikkung 25 festgelegt ist. Die Sickung ist zugleich der äußere Anschlag für die ausfahrende Kolbenstange 12 bzw. für den ausfahrenden Kolben 13. Die am inneren Ende der Kolbenstange 12 befestigte Kolbeneinheit unterteilt den Arbeitsraum 15 in zwei Teilkammern 15 a und 15 b, die durch eine gedrosselte Überströmverbindung 13 a miteinander verbunden sind.

**Patentansprüche**

1. Pneumatische Feder (10), umfassend einen Behälter (11), der an einem Ende offen und an dem anderen Ende geschlossen ist, eine Kolbenstange (12), die im Bereich des offenen Endes des Behälters (11) mittels einer Kolbenstangenführung (14) geführt ist und durch eine Kolbenstangendichtung abgedichtet ist, einen Arbeitsraum (15,15a), der im Bereich des geschlossenen Endes des Behälters (11) ausgebildet ist, eine Dichtungskammer (16), die im Bereich des offenen Endes des Behälters (11) ausgebildet ist, einen inneren Dichtring (18), der den Arbeitsraum (15) und die Dichtungskammer (16) voneinander trennt, und einen äußeren Dichtring (17), der der Kolbenstangenführung (14) zugeordnet ist, wobei der innere Dichtring (18) und der äußere Dichtring (17) jeweils mit einer radial inneren Dichtlippe (22,20) und einer radial äußeren Dichtlippe (21,19) ausgebildet sind, wobei weiter die radial inneren Dichtlippen (22,20) des inneren Dichtrings (18) und des äußeren Dichtrings (17) jeweils an der Kolbenstange (12) anliegen, wobei weiter die Dichtlippen (21,22) des inneren Dichtrings (18) und die Dichtlippen (19,20) des äußeren Dichtrings (17) einander gegenüberliegend angeordnet sind, und wobei weiter der in der Dichtungskammer (16) herrschende Druck größer ist als der im Arbeitsraum (15) herrschende Druck, dadurch **gekennzeichnet,** daß die radial äußeren Dichtlippen (21,19) des inneren Dichtrings (18) und des äußeren Dichtrings (17) jeweils direkt an der Innenwandung des Behälters (11) anliegen, und daß der in der Dichtungskammer (16) herrschende Druck von einem Gas erzeugt wird.

2. Pneumatische Feder (10) nach Anspruch 1, dadurch **gekennzeichnet,** daß der äußere Dichtring (17) und der innere Dichtring (18) durch einen äußeren Stützring (23) auf Distanz gehalten sind.

3. Pneumatische Feder (10) nach einem der Ansprüche 1 oder 2, dadurch **gekennzeichnet,** daß sich in der Dichtungskammer (16) ein Schmiermittel befindet.

4. Pneumatische Feder (10) nach Anspruch 3, dadurch **gekennzeichnet,** daß das Schmiermittel ein flüssiges Schmiermittel ist.

**Claims**

1. Pneumatic spring (10), comprising a container (11), which is open at one end and closed at the other end, a piston rod (12), which in the region of the open end of the container (11) is guided by means of a piston rod guide (14) and is sealed by a piston rod seal, a working chamber (15, 15a), which is constructed in the region of the closed end of the container (11), a sealing chamber (16), which is constructed in the region of the open end of the container (11), an inner gasket 118), which separates the working chamber (15) and the sealing chamber (16) from each other, and an outer gasket (17), which is associated with the piston rod guide (14), the inner gasket (18) and the outer gasket (17) being constructed respectively with a radially inner sealing lip (22, 20) and a radially outer sealing lip (21, 19), furthermore the radially inner sealing lips (22, 20) of the inner gasket (18) and of the outer gasket (17) bearing respectively against the piston rod (12), furthermore the sealing lips (21, 22) of the inner gasket (18) and the sealing lips (19, 20) of the outer gasket (17) being arranged opposite one another and furthermore the pressure prevailing in the sealing chamber (16) being greater than the pressure prevailing in the working chamber (15), characterised in that the radially outer sealing lips (21, 19) of the inner gasket (18) and of the outer gasket (17) bear respectively directly on the inner wall of the container (11), and that the pressure prevailing in the sealing chamber (16) is produced by a gas.

2. Pneumatic spring (10) according to Claim 1, characterised in that the outer gasket (17) and the inner gasket (18) are spaced apart by an outer support ring (23).

3. Pneumatic spring (10) according to one of Claims 1 or 2, characterised in that a lubricant is located in the sealing chamber (16).

4. Pneumatic spring (10) according to Claim 3, characterised in that the lubricant is a liquid lubricant.

**Revendications**

1. Ressort pneumatique (10) comportant un récipient (11) qui est ouvert à une extrémité et fermé à l'autre extrémité, une tige de piston (12) qui est guidée dans la région de l'extrémité ouverte du récipient (11), au moyen d'un organe de guidage de tige de piston (14) et qui est rendue étanche par une étanchéité de tige de piston, une chambre de travail (15, 15a) qui est formée dans la région de l'extrémité fermée du récipient (11), une chambre d'étanchéité (16) qui est formée dans la région de l'extrémité ouverte du récipient (11), une bague d'étanchéité (18) intérieure qui sépare l'une de l'autre la chambre de travail (15) et la chambre d'étanchéité (16) ainsi qu'une bague d'étanchéité (17) extérieure qui est associée à l'organe de guidage de tige de piston (14), la bague d'étanchéité intérieure (18) et la bague d'étanchéité extérieure (17) présentant chacune une lèvre d'étanchéité (22, 20) radialement intérieure et une lèvre d'étanchéité (21, 19) radialement extérieure, les lèvres d'étanchéité (22, 20) radialement intérieures de la bague d'étanchéité intérieure (18) et de la bague d'étanchéité extérieure (17) s'appliquant chacune contre la tige de piston (12), les lèvres d'étanchéité (21, 22) de la bague d'étanchéité intérieure (18) et les lèvres d'étanchéité (19, 20) de la bague d'étanchéité extérieure (17) étant disposées face à face et la pression régnant dans la chambre d'étanchéité (16) étant supérieure à celle régnant dans la chambre de travail (15), caractérisé en ce que les lèvres d'étanchéité (21, 19) radialement extérieures de la bague d'étanchéité intérieure (18) et de la bague d'étanchéité extérieure (17) s'appliquent chacune directement contre la paroi intérieure du récipient (11) et en ce que la pression régnant dans la chambre d'étanchéité (16) est produite par un gaz.

2. Ressort pneumatique (10) selon la revendication 1, caractérisé en ce que la bague d'étanchéité extérieure (17) et la bague d'étanchéité intérieure (18) sont maintenues écartées par une bague d'appui (23) extérieure.

3. Ressort pneumatique (10) selon la revendication 1 ou 2, caractérisé en ce qu'un lubrifiant se trouve dans la chambre d'étanchéité (16).

4. Ressort pneumatique (10) selon la revendication 3, caractérisé en ce que le lubrifiant est un lubrifiant liquide.